# DEMANDE DE BREVET EUROPEEN

(11) **EP 1 849 655 A1**
(43) Date de publication de la demande: **31.10.2007**
(21) Numéro de dépôt: 07106971.0
(22) Date de dépôt: 25.04.2007
(51) Int. Cl.: B60R 9/10

(54) **Dispositif pour le transport de bicyclette**

(30) Priorité: 26.04.2006 FR 0651485
(71) Demandeur: Partech, 74960 Cran Gevrier (FR)
(72) Inventeur: Lagier, Yves, 74370 Argonay (FR)
(74) Mandataire: Poncet, Jean-François

(57) **Abrégé**

Dispositif pour le transport d'une bicyclette (10), comportant un support (2) se développant selon une direction longitudinale (I-I), adapté pour supporter les roues (10a, 10b) de la bicyclette (10), dans lequel le support (2) comprend :
- un premier tronçon longitudinal (2a) en rampe montante entre une première extrémité basse (4a) et une première extrémité haute (4b), adapté pour supporter une première roue (10b) de la bicyclette (10) lors de son transport,
- un second tronçon longitudinal (2b) à profil longitudinal en creux, se développant depuis la première extrémité haute (4b) du premier tronçon longitudinal (2a) jusqu'à une seconde extrémité haute (4c), et adapté pour supporter en son creux la seconde roue (10a) de la bicyclette (10) lors de son transport.

## Description

La présente invention concerne un dispositif pour le transport de bicyclette.

Des dispositifs pour le transport de bicyclette généralement connus comportent :
- des moyens de fixation pour fixer le dispositif à un moyen de transport,
- un support se développant selon une direction longitudinale, adapté pour supporter les roues de la bicyclette,
- des moyens de retenue latérale des roues de la bicyclette sur le support.

Les dispositifs connus à ce jour comprennent souvent un profilé droit à section transversale en U pour réaliser le support et les moyens de retenue latérale des roues de la bicyclette. Des moyens de fixation supplémentaires, tels que des sangles, sont utilisés pour immobiliser la bicyclette en position verticale sur le support en solidarisant celle-ci, par exemple, à un montant vertical prévu sur le support. On immobilise ainsi la bicyclette à la verticale sur le support, et on empêche tout mouvement de celle-ci selon la direction longitudinale du support.

De tels dispositifs connus sont notamment décrits dans le document US 6,019,266 qui présente un dispositif adaptable à l'arrière d'un véhicule automobile, et dans le document EP 1 466 819 qui présente un dispositif pour le transport d'une bicyclette sur le côté du siège d'un télésiège.

Les dispositifs connus comportent cependant de nombreux inconvénients. En effet, le chargement et le déchargement de la bicyclette sont généralement longs puisqu'il est nécessaire de mettre en place ou d'ôter divers moyens de fixation supplémentaires pour immobiliser totalement la bicyclette sur le dispositif de transport. En outre, il est nécessaire d'effectuer des réglages préalables sur les dispositifs existants pour transporter des bicyclettes de tailles différentes, réglages qui s'avèrent parfois longs.

Les opérations de chargement et déchargement de la bicyclette dans les dispositifs existants peuvent également s'avérer pénibles puisque nécessitant de soulever la totalité du poids de la bicyclette afin de l'installer sur le support. Il en résulte une fatigue importante de la personne responsable du chargement et du déchargement lorsque celle-ci doit effectuer ces opérations tout au long de la journée de façon répétitive et fréquente, notamment dans le cas d'une utilisation avec une remontée mécanique.

Un premier problème proposé par l'invention est de concevoir un dispositif pour le transport d'une bicyclette qui soit simple et qui assure un calage longitudinal et latéral optimal de celle-ci quelle que soit sa taille, pour un transport fiable et sûr, sans risque de perte et ne nécessitant pas l'utilisation d'un quelconque moyen de fixation rapporté telle qu'une sangle.

Simultanément, l'invention vise à concevoir un dispositif pour le transport d'une bicyclette qui facilite les opérations de chargement et de déchargement et qui demande nettement moins d'efforts pour effectuer les opérations de chargement et de déchargement.

Selon un autre aspect, l'invention vise à concevoir un dispositif pour le transport d'une bicyclette qui ne nécessite aucune opération autre que celle du chargement de la bicyclette pour assurer un calage longitudinal et latéral de la bicyclette, et qui soit capable d'endurer de fortes accélérations ou décélérations du moyen de transport.

L'invention cherche en outre à concevoir un dispositif pour le transport d'une bicyclette qui soit facilement adaptable à tout moyen de transport, et en particulier à une remontée mécanique débrayable ou non débrayable comportant des sièges ou des cabines.

Pour atteindre ces objets ainsi que d'autres, l'invention propose un dispositif pour le transport d'une bicyclette, comportant :
- des moyens de fixation pour fixer le dispositif à un moyen de transport,
- un support se développant selon une direction longitudinale, adapté pour supporter les roues de la bicyclette,
- des moyens de retenue latérale des roues de la bicyclette sur le support,
dans lequel le support comprend :
- un premier tronçon longitudinal en rampe montante entre une première extrémité basse et une première extrémité haute, adapté pour supporter une première roue de la bicyclette lors de son transport,
- un second tronçon longitudinal à profil longitudinal en creux, se développant depuis la première extrémité haute du premier tronçon longitudinal jusqu'à une seconde extrémité haute, et adapté pour supporter en son creux la seconde roue de la bicyclette lors de son transport.

Un tel dispositif permet un calage longitudinal optimal de la bicyclette, et ce quelle que soit la taille de la bicyclette. Un tel calage est capable d'endurer les chocs pouvant survenir habituellement lors du transport.

Les opérations de chargement et de déchargement de la bicyclette ne demandent que peu d'efforts à l'utilisateur, celui-ci installant progressivement la bicyclette sur le support en la faisant rouler sur le premier tronçon longitudinal en rampe montante jusqu'à l'engagement d'une roue de la bicyclette dans le creux du second tronçon longitudinal à profil longitudinal en creux. Lors de l'opération de déchargement, l'utilisateur n'aura qu'à soulever la roue engagée dans le second tronçon longitudinal à profil longitudinal en creux afin de laisser rouler la bicyclette sur le premier tronçon longitudinal (dans le sens inverse de l'opération de chargement) pour la sortir du dispositif.

Avantageusement, on peut prévoir que :
- le support comprend une tige principale cintrée pour réaliser les premier et second tronçons longitudinaux,
- les moyens de retenue latérale comprennent deux tiges secondaires, disposées de part et d'autre et au-dessus de la tige principale et solidaires de la tige principale.

Par "tige", on entend désigner un objet longiligne de section transversale quelconque.

On réalise ainsi de façon simple le support du dispositif qui présente alors une section transversale adaptée pour assurer une retenue latérale optimale des roues de la bicyclette sur le support. L'utilisation d'une tige principale et de deux tiges secondaires permet de réaliser un support se développant selon une direction longitudinale avec des tronçons mis en forme par pliage de façon simple et économique pour la réalisation des premier et second tronçons du support. Une telle mise en forme s'avèrerait très difficile, voire impossible en utilisant un profilé droit à section transversale en U.

De préférence, on peut prévoir que :
- les tiges secondaires ont une section transversale inférieure à celle de la tige principale,
- la tige principale et/ou les tiges secondaires sont des tubes creux à section transversale circulaire.

On allège ainsi la structure du dispositif selon l'invention afin de déséquilibrer le moins possible le moyen de transport.

Selon un mode de réalisation de l'invention, on peut prévoir que :
- les tiges secondaires sont cintrées de façon similaire à la tige principale, avec respectivement chacune un premier tronçon longitudinal en rampe montante entre une première extrémité basse et une première extrémité haute, et avec respectivement chacune un second tronçon longitudinal à profil longitudinal en creux se développant depuis la première extrémité haute du premier tronçon longitudinal jusqu'à une seconde extrémité haute,
- les moyens de retenue latérale des roues de la bicyclette sur le support comprennent deux longerons supplémentaires qui relient les deux extrémités du second tronçon à profil longitudinal en creux de chacune des tiges secondaires, les longerons supplémentaires étant disposés au-dessus et de part et d'autre de la tige principale en étant écartés l'un de l'autre d'une distance un peu supérieure à l'épaisseur d'une roue de la bicyclette.

Selon un autre mode de réalisation, on peut prévoir que :
- les tiges secondaires sont cintrées, avec respectivement chacune un premier tronçon longitudinal en rampe montante entre une première extrémité basse et une première extrémité haute, et avec respectivement chacune un second tronçon longitudinal se développant depuis la première extrémité haute du premier tronçon longitudinal jusqu'à la seconde extrémité haute du support, les tronçons longitudinaux étant écartés l'un de l'autre d'une distance un peu supérieure à l'épaisseur d'une roue de la bicyclette,
- les moyens de retenue latérale des roues de la bicyclette sur le support comprennent deux tiges auxiliaires, disposées de part et d'autre et au-dessus de la tige principale, solidaires de la tige principale et cintrées de façon similaire au second tronçon longitudinal du support, avec un profil longitudinal en creux pour relier les premières extrémités hautes des tiges secondaires à la seconde extrémité haute du support.

Dans les deux modes de réalisation ci-dessus, on assure ainsi un calage latéral optimal de la bicyclette sur le dispositif, calage latéral qui est suffisant pour endurer des chocs latéraux pouvant survenir lors du transport de la bicyclette. En outre, de tels moyens de retenue latérale des roues de la bicyclette permettent de maintenir celle-ci en position verticale sans que l'utilisateur n'ait à utiliser de moyens rapportés tels que des sangles pour effectuer un tel maintien.

La retenue latérale de la bicyclette et son maintien vertical ne nécessitent aucune autre opération supplémentaire que celle du chargement de la bicyclette. Cela permet d'économiser du temps.

Avantageusement, les moyens de retenue latérale des roues de la bicyclette sur le support peuvent comprendre deux arceaux dressés de part et d'autre d'une partie au moins du premier tronçon de la tige principale, les arceaux étant chacun solidaires de l'une des tiges secondaires et se développant sensiblement au-dessus de la tige secondaire correspondante.

On améliore ainsi à nouveau la retenue latérale de la bicyclette sur le support, les deux roues de la bicyclette étant alors maintenues sur le support de façon fiable et sûre.

Selon encore un autre mode de réalisation de l'invention, on peut avantageusement prévoir que le support comporte un troisième tronçon longitudinal configuré en rampe montante et se développant à l'opposé du premier tronçon longitudinal, entre une troisième extrémité basse et la seconde extrémité haute, la troisième extrémité basse étant de préférence située au même niveau que la première extrémité basse du premier tronçon longitudinal.

Ce mode de réalisation de l'invention s'avère particulièrement avantageux dans le cas d'une utilisation du dispositif sur le côté d'un télésiège non débrayable, qui n'accorde que très peu de temps à l'utilisateur pour effectuer les opérations de chargement ou de déchargement de la bicyclette.

Un tel mode de réalisation permet d'effectuer d'une part le chargement de la bicyclette selon un premier côté du dispositif en faisant rouler la bicyclette sur le premier tronçon longitudinal jusqu'à engagement d'une roue dans le creux du second tronçon longitudinal à profil longitudinal en creux et en déchargeant ensuite la bicyclette en faisant rouler celle-ci sur le troisième tronçon longitudinal en faisant sortir la bicyclette du côté opposé à celui du premier tronçon longitudinal. Les opérations de chargement et de déchargement de la bicyclette s'effectuent ainsi selon une même direction et un même sens. On tire ainsi profit de l'avance constante que peut avoir un moyen de transport, tel qu'un télésiège non débrayable, dans le cas où le dispositif est fixé sur le moyen de transport avec la direction longitudinale du support orientée parallèlement à la direction d'avance du moyen de transport.

De préférence, les moyens de fixation peuvent comprendre une fixation du premier tronçon longitudinal au moyen de transport et une fixation du second tronçon longitudinal au moyen de transport.

De tels moyens de fixation permettent de reprendre tous les efforts pouvant se produire lors de chocs ou d'oscillations survenant lors du transport de la bicyclette.

L'invention prévoit également une remontée mécanique à sièges ou à cabines pour le transport de personnes, comprenant un dispositif tel que défini ci-dessus, fixé à au moins un siège ou une cabine, avec la direction longitudinale du support orientée parallèlement à la direction d'avance du siège ou de la cabine, avec de préférence le premier tronçon longitudinal du support orienté vers l'arrière du siège ou de la cabine, et avec le second tronçon longitudinal du support orienté vers l'avant du siège ou de la cabine.

Avantageusement, le dispositif peut être monté sur le côté du siège ou de la cabine, de préférence sur le côté extérieur du siège ou de la cabine.

L'invention prévoit également une remontée mécanique à sièges ou à cabines pour le transport de personnes, comprenant un dispositif tel que défini ci-dessus, fixé à au moins un siège ou une cabine, avec la direction longitudinale du support orientée perpendiculairement à la direction d'avance du siège ou de la cabine, avec de préférence le premier tronçon du support orienté du côté extérieur du siège ou de la cabine.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation du dispositif de l'invention ;
- la figure 2 est une vue en perspective du dispositif de la figure 1 monté sur le côté d'un siège d'une remontée mécanique, et portant une bicyclette ;
- la figure 3 est une vue de dessus de la figure 2 ;
- la figure 4 est une vue de côté d'un second mode de réalisation du dispositif de l'invention, fixé sur le côté d'une remontée mécanique, et portant une bicyclette ; et
- la figure 5 est une vue en perspective d'un troisième mode de réalisation du dispositif de l'invention.

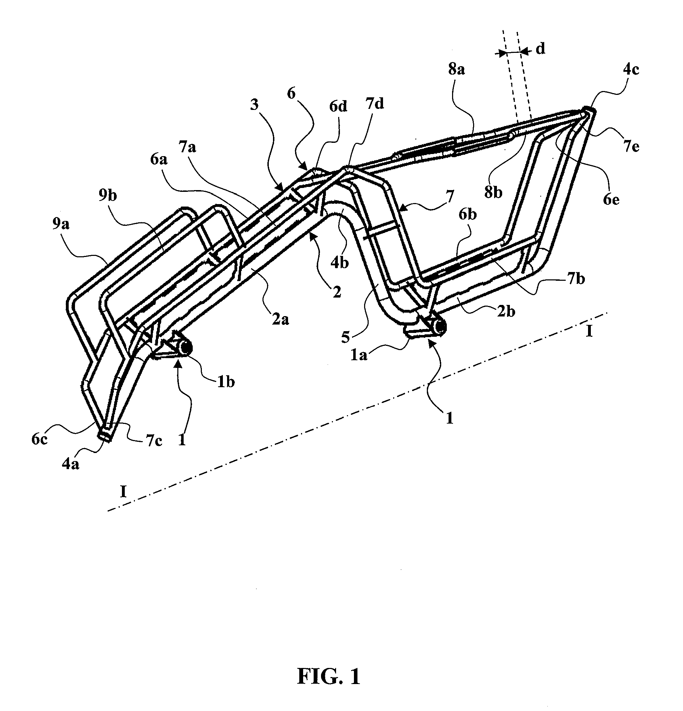

Un dispositif selon l'invention est représenté en perspective sur la figure 1. Celui-ci comporte un support 2 se développant selon une direction longitudinale 1-1, adapté pour supporter les roues d'une bicyclette, et des moyens de fixation 1 pour le fixer à un moyen de transport.

Ce dispositif comporte également des moyens de retenue latérale 3 des roues de la bicyclette sur le support 2. Le support 2 comprend plus particulièrement un premier tronçon longitudinal 2a en rampe montante entre une première extrémité basse 4a et une première extrémité haute 4b, adapté pour supporter une première roue de la bicyclette lors de son transport, et un second tronçon longitudinal 2b à profil longitudinal en creux, se développant depuis la première extrémité haute 4b du premier tronçon longitudinal 2a jusqu'à une seconde extrémité haute 4c, et adapté pour supporter et contenir en son creux une partie inférieure, avantageusement la moitié inférieure de la seconde roue de la bicyclette lors de son transport.

Le support 2 comprend une tige principale 5 cintrée pour réaliser les premier et second tronçons longitudinaux 2a et 2b.

Les moyens de retenue latérale 3 comprennent deux tiges secondaires 6 et 7 disposées de part et d'autre et au-dessus de la tige principale 5 et solidaires de la tige principale 5.

Dans les modes de réalisation des figures 1 à 4, les tiges secondaires 6 et 7 sont cintrées de façon sensiblement identiques à la tige principale 5, avec respectivement chacune un premier tronçon longitudinal 6a ou 7a en rampe montante entre une première extrémité basse 6c ou 7c et une première extrémité haute 6d ou 7d, et avec respectivement chacune un second tronçon longitudinal 6b ou 7b à profil longitudinal en creux se développant depuis les premières extrémités hautes 6d ou 7d respectives des premiers tronçons longitudinaux 6a et 7a jusqu'à des secondes extrémités hautes 6e et 7e respectives.

On réalise ainsi un support 2 dont les tiges secondaires 6 et 7 assurent un calage latéral optimal des roues d'une bicyclette.

L'utilisation de la tige principale 5 et des tiges secondaires 6 et 7 permet de réaliser un support 2 cintré longitudinalement selon des formes particulières qui ne pourraient être obtenues que difficilement par l'utilisation d'un profilé droit à section transversale en U.

Dans le mode de réalisation illustré sur la figure 1, le dispositif comprend deux longerons 8a et 8b. Le longeron 8a relie les extrémités 6d et 6e du second tronçon 6b de la tige secondaire 6. Le longeron 8b relie les extrémités 7d et 7e du second tronçon 7b de la tige secondaire 7. Les longerons 8a et 8b sont disposés au-dessus et de part et d'autre de la tige principale 5, en étant écartés l'un de l'autre d'une distance d un peu supérieure à l'épaisseur d'une roue de bicyclette.

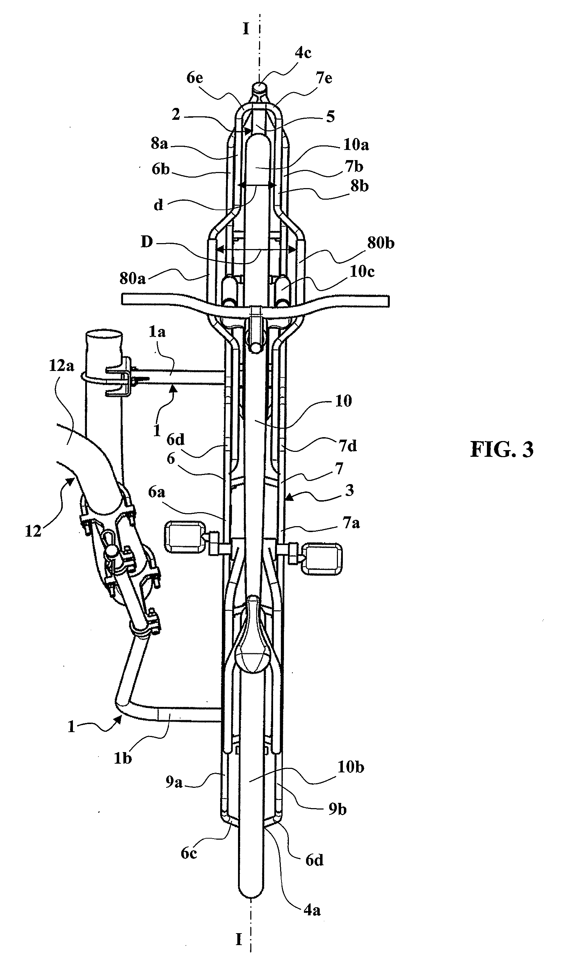

Sur la figure 3, on met en évidence le fait que les longerons 8a et 8b comportent respectivement un tronçon intermédiaire 80a ou 80b décalé transversalement à l'écart de la direction longitudinale I-I. Les tronçons intermédiaires 80a et 80b sont ainsi distants l'un de l'autre d'une distance D supérieure à la distance d. On permet ainsi la pénétration de la fourche 10c de la bicyclette 10 entre les longerons 8a et 8b. Cette pénétration de la fourche 10c sera fonction de la taille de la bicyclette 10. On permet ainsi à la roue avant 10a de venir reposer sur le second tronçon 2b à profil longitudinal en creux, et ce quelle que soit la taille de la bicyclette 10.

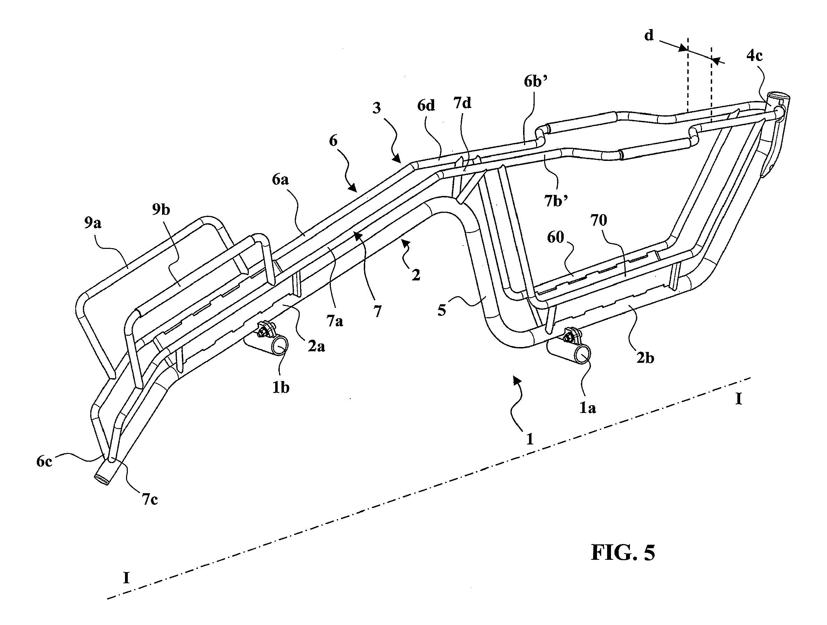

Le mode de réalisation de la figure 5 est une variante de celui des figures 1 à 3.

Dans ce mode de réalisation, les tiges secondaires 6 et 7 sont cintrées, avec respectivement chacune un premier tronçon longitudinal 6a ou 7a en rampe montante entre une première extrémité basse 6c ou 7c et une première extrémité haute 6d ou 7d, et avec respectivement chacune un second tronçon longitudinal 6b' ou 7b' se développant depuis la première extrémité haute 6d ou 7d du premier tronçon longitudinal 6a ou 7a jusqu'à la seconde extrémité haute 4c du support 2, les tronçons longitudinaux 6b' et 7b' étant écartés l'un de l'autre d'une distance d un peu supérieure à l'épaisseur d'une roue de la bicyclette.

En outre, les moyens de retenue latérale 3 des roues de la bicyclette sur le support 2 comprennent deux tiges auxiliaires 60 et 70, disposées de part et d'autre et au-dessus de la tige principale 5, solidaires de la tige principale 5 et cintrées de façon similaire au second tronçon longitudinal 2b du support 2, avec un profil longitudinal en creux pour relier les premières extrémités hautes 6d et 7d des tiges secondaires 6 et 7 à la seconde extrémité haute 4c du support 2.

Un tel mode de réalisation est plus facile à réaliser. En effet, la liaison entre les tiges auxiliaires 60 et 70 avec les tiges secondaires 6 et 7 au voisinage de leur première extrémité haute 6d et 7d est plus facile que la liaison des longerons 8a et 8b (figures 1 à 3) avec les tiges secondaires 6 et 7 qui nécessite une découpe particulière des extrémités des longerons 8a et 8b ainsi qu'un travail (de soudure par exemple) dans une zone à accessibilité réduite.

Dans les modes de réalisation illustrés sur les figures 1 et 5, on prévoit également deux arceaux 9a, 9b dressés de part et d'autre d'une partie au moins du premier tronçon 2a de la tige principale 5, les arceaux 9a, 9b étant chacun solidaires respectivement de la tige secondaire 6 ou 7 et se développant sensiblement au-dessus de la tige secondaire 6 ou 7 correspondante.

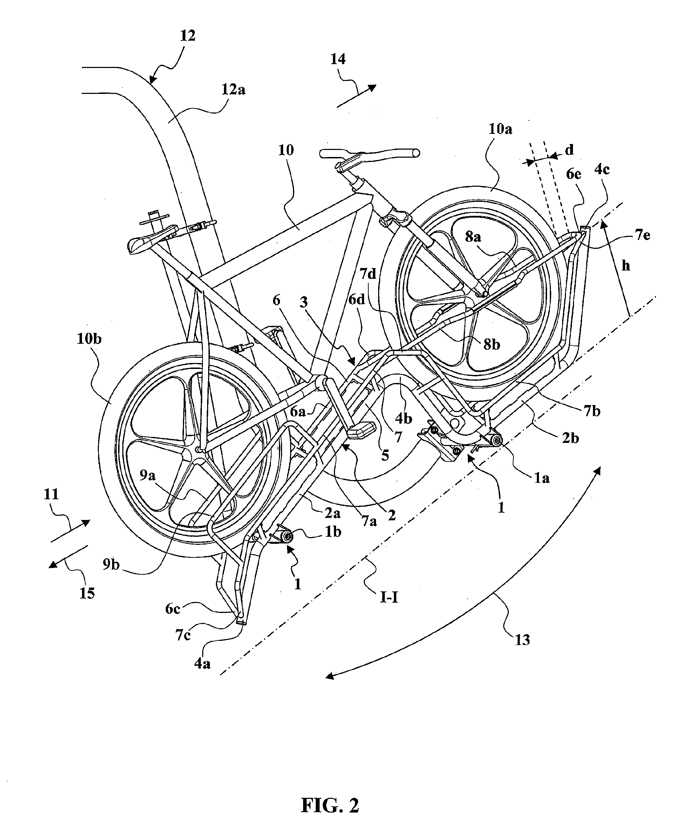

L'utilisation des dispositifs des figures 1 et 5 sera mieux expliquée sur la figure 2.

Sur la figure 2, une bicyclette 10 est en place dans un dispositif de transport selon l'invention, avec une première roue telle que sa roue arrière 10b supportée par le premier tronçon longitudinal 2a en rampe montante, et avec une seconde roue telle que sa roue avant 10a engagée dans le creux du second tronçon longitudinal 2b à profil longitudinal en creux.

Lors de l'utilisation d'un tel dispositif de transport selon l'invention, pour le chargement d'une bicyclette, l'utilisateur pousse la bicyclette 10 dans le sens et la direction définis par la flèche 11 en faisant rouler la roue avant 10a puis la roue arrière 10b sur le premier tronçon longitudinal 2a en rampe montante, et ce jusqu'à engagement de la roue avant 10a dans le creux du second tronçon longitudinal 2b à profil longitudinal en creux comme illustré sur la figure 2. Lors de l'opération de chargement, les roues 10a et 10b roulent sur la tige principale 5 et sont guidées latéralement par les tiges secondaires 6 et 7 disposées de part et d'autre et au-dessus de la tige principale 5.

Une fois la roue avant 10a engagée dans le creux du second tronçon longitudinal 2b, la bicyclette 10 est parfaitement calée selon la direction longitudinale I-I. En effet, le poids de la bicyclette 10 a tendance à entraîner celle-ci dans la direction longitudinale 1-1 dans le sens inverse à celui indiqué par la flèche 11 du fait de la configuration en rampe montante du premier tronçon longitudinal 2a. La roue avant 10a est alors bloquée par la première extrémité haute 4b du premier tronçon longitudinal 2a.

On effectue ainsi un calage longitudinal fiable et sûr de la bicyclette 10, et ce quelle que soit la taille de la bicyclette 10. En effet, même si la bicyclette 10 présente une taille différente de celle illustrée sur la figure 2, sa roue avant 10a vient de toute façon en butée contre la première extrémité haute 4b du fait de la configuration en rampe montante du premier tronçon longitudinal 2a.

La roue avant 10a est engagée entre les deux longerons 8a et 8b, n'étant écartés l'un de l'autre que d'une distance d un peu supérieure à l'épaisseur de la roue avant 10a de la bicyclette 10. Cela permet de maintenir la bicyclette 10 en position verticale telle qu'illustrée sur la figure 2.

On voit donc que le maintien tant en position verticale qu'en position longitudinale de la bicyclette 10 ne nécessite aucune autre opération que celle du chargement de la bicyclette 10 jusqu'à engagement de sa roue avant 10a dans le creux du second tronçon longitudinal 2b.

Les arceaux 9a et 9b contribuent également au maintien vertical de la bicyclette 10 en enserrant la roue arrière 10b de la bicyclette 10.

L'utilisation des arceaux 9a et 9b est facultative, à partir du moment où les longerons 8a et 8b sont situés à une hauteur h suffisante vis-à-vis du creux du second tronçon longitudinal 2b pour maintenir la roue avant 10a de la bicyclette 10 en position verticale sur une hauteur suffisante.

Sur la figure 2, la hauteur h est telle que la roue avant 10a se trouve engagée dans le creux du second tronçon longitudinal 2b selon un peu moins de sa moitié.

La hauteur h pourra être choisie de façon empirique pour assurer le maintien vertical fiable et sûr de la plupart des bicyclettes de tailles différentes.

Sur les figures 2 et 3, un dispositif de transport selon l'invention est monté sur le côté d'un siège 12 d'une remontée mécanique. Le siège 12 n'est représenté que partiellement.

Le dispositif de transport est solidarisé à un arceau latéral 12a du siège 12 par des moyens de fixation 1. Les moyens de fixation 1 comprennent une fixation 1 a du second tronçon longitudinal 2b du support 2 à l'arceau 12a du siège 12 et une fixation 1b permettant de solidariser le premier tronçon longitudinal 2a du support 2 à l'arceau latéral 12a du siège 12.

Une telle fixation en deux points différents écartés l'un de l'autre selon la direction longitudinale I-I permet de reprendre efficacement les efforts lors des éventuelles oscillations du siège 12, telles que les oscillations longitudinales illustrées par la double flèche 13, ou telles que les oscillations transversales.

De telles oscillations peuvent notamment se produire lors de l'entrée en gare du siège 12 dans le cas où la remontée mécanique est du type débrayable. En effet, lors de son entrée en gare, le siège 12 subit une perte de vitesse soudaine du fait du débrayage, et subit l'action de moyens de guidage latéraux, ce qui peut entraîner des accélérations importantes dans la direction longitudinale et surtout dans la direction transversale. Un maintien insuffisant pourrait entraîner la perte de la bicyclette 10. Le dispositif de transport selon l'invention permet un calage longitudinal et latéral de la bicyclette 10 capable d'endurer des oscillations brusques du siège 12 lors de son entrée en gare ou lors d'un arrêt d'urgence de la remontée mécanique, sans déséquilibre notable de la bicyclette 10 et en tous cas sans perte de celle-ci.

Afin de faciliter les opérations de chargement et de déchargement de la bicyclette 10, le dispositif est monté de préférence du côté extérieur du siège 12. Le côté extérieur d'un siège est le côté du siège qui se trouve en permanence le plus à l'écart des pylônes soutenant le câble de la remontée mécanique.

Sur les figures 2 et 3, le dispositif de transport est fixé au siège 12 de façon à aligner la direction longitudinale I-I du support 2 avec la direction d'avance définie par la flèche 14 du siège 12, le premier tronçon longitudinal 2a de la tige principale 5 étant orienté vers l'arrière du siège 12, et le second tronçon longitudinal 2b de la tige principale 5 étant orienté vers l'avant du siège 12.

Le chargement de la bicyclette 10 s'effectue ainsi par l'arrière du siège 12 par un mouvement illustré par la flèche 11 de même sens et de même direction que l'avance du siège 12.

Lors de l'opération de déchargement, l'utilisateur n'aura qu'à soulever la roue avant 10a de la bicyclette 10 selon le mouvement illustré par la flèche 15 pour faire échapper la roue avant 10a du creux du second tronçon longitudinal 2b. Le siège 12, continuant son mouvement d'avance illustré par la flèche 14 permettra alors de sortir la bicyclette 12 du dispositif de transport en la faisant descendre doucement selon le premier tronçon longitudinal 2a configuré en rampe montante.

L'utilisateur n'a ainsi jamais besoin de soulever la totalité du poids de la bicyclette 10 tant lors de l'opération de chargement que lors de l'opération de déchargement, ce qui vient diminuer sensiblement la pénibilité du travail d'une personne qui doit effectuer des opérations de chargement et de déchargement tout au long d'une journée.

Afin de diminuer l'encombrement du siège 12 muni d'un dispositif selon l'invention, il est possible de fixer le dispositif sur l'arrière du siège 12, avec la direction longitudinale 1-1 du support 2 orientée perpendiculairement à la direction d'avance (flèche 14) du siège 12.

Une telle orientation permet en outre d'assurer un calage optimal de la bicyclette 10 lors d'oscillations transversales (c'est-à-dire perpendiculaires à la direction d'avance représentée par la flèche 14) du siège 12.

De telles oscillations peuvent se produire notamment lors de l'entrée en gare du siège 12 qui est alors guidé par des guides latéraux. Ces oscillations transversales sont généralement plus violentes encore que celles se produisant selon le mouvement illustré par la double flèche 13.

Afin de faciliter les opérations de chargement et de déchargement, lorsque le dispositif est fixé au siège 12 avec la direction longitudinale 1-1 orientée perpendiculairement à la direction d'avance (flèche 14) du siège 12, le premier tronçon longitudinal 2a du support 2 peut avantageusement être orienté du côté extérieur du siège 12.

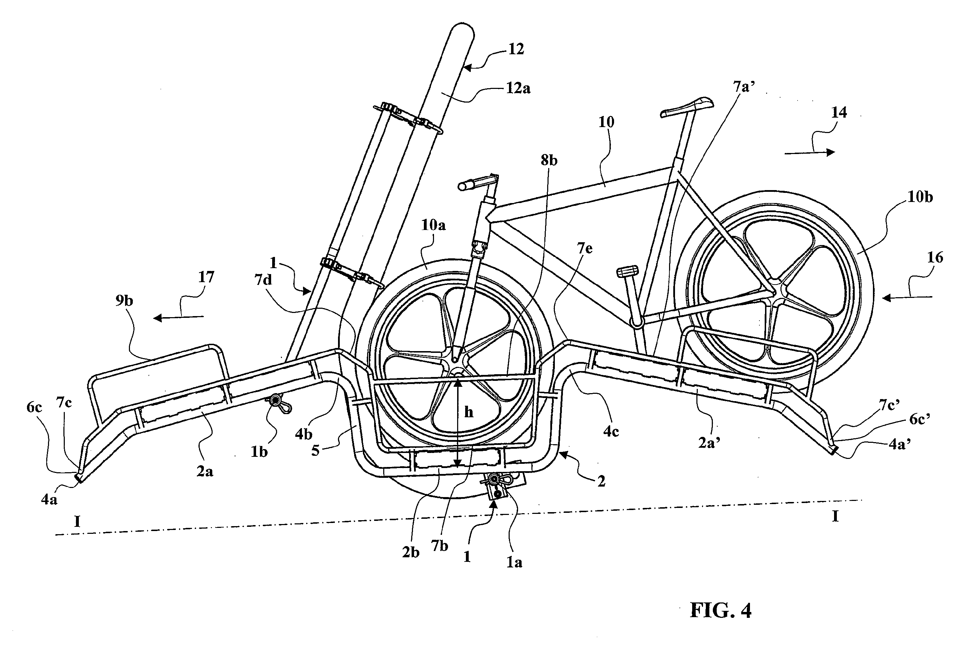

Un autre mode de réalisation de l'invention est représenté sur la figure 4.

Dans ce mode de réalisation, le support 2 comporte un troisième tronçon longitudinal 2a' configuré en rampe montante et se développant à l'opposé du premier tronçon longitudinal 2a, entre une troisième extrémité basse 4a' et la seconde extrémité haute 4c. La troisième extrémité basse 4a' est de préférence située au même niveau que la première extrémité basse 4a du premier tronçon longitudinal 2a.

Les tiges secondaires 6 et 7 sont cintrées de façon sensiblement identique à la tige principale 5, avec respectivement chacune un troisième tronçon longitudinal 6a' ou 7a' configuré en rampe montante et se développant à l'opposé des premiers tronçons longitudinaux 6a et 7a, entre une troisième extrémité basse 6c', 7c' et les secondes extrémités hautes 6e, 7e. Les troisièmes extrémités basses 6c', 7c' sont situées au même niveau que les premières extrémités basses 6c et 7c des premiers tronçons longitudinaux 6a et 7a.

Ce mode de réalisation particulier de l'invention s'avère particulièrement avantageux dans le cas d'une utilisation avec une remontée mécanique non débrayable. Une telle remontée mécanique présente une vitesse de déplacement sensiblement constante, ce qui a alors tendance à diminuer sensiblement le temps disponible pour les opérations de chargement et déchargement de la bicyclette 10.

Le mode de réalisation illustré sur la figure 4 permet de remédier à cet inconvénient en permettant à l'utilisateur de charger la bicyclette 10 en la faisant rouler sur la tige principale 5 sur le troisième tronçon longitudinal 2a' selon un mouvement de sens et de direction illustrés par la flèche 16. L'utilisateur fait rouler la bicyclette 10 sur le support 2 jusqu'à engagement de la roue avant 10a ou de la roue arrière 10b dans le creux du second tronçon longitudinal 2b à profil longitudinal en creux.

Lors du déchargement de la bicyclette 10, l'utilisateur soulève l'avant ou l'arrière de la bicyclette 10 selon si c'est la roue avant 10a ou la roue arrière 10b qui est engagée dans le creux du second tronçon longitudinal 2b, afin de l'entraîner vers l'arrière du dispositif selon le mouvement illustré par la flèche 17.

Les mouvements illustrés par les flèches 16 et 17 s'effectuent de façon aisée et complémentaire avec l'avance du siège 12 illustrée par la flèche 14.

Dans les modes de réalisation illustrés sur les figures 1 à 4, les tiges secondaires 6 et 7 ont une section transversale inférieure à celle de la tige principale 5. Ceci permet de limiter le poids du dispositif de transport afin de ne pas trop déséquilibrer le siège 12 de la remontée mécanique. Plus particulièrement, la tige principale 5 est un tube creux à section transversale circulaire, et les tiges secondaires 6 et 7 sont des tiges pleines du fait de leur très faible diamètre. Il est cependant envisageable de prévoir des tiges secondaires à section transversale supérieure qui soient des tubes creux.

Bien que le moyen de transport illustré sur les figures 2 à 4 soit un siège 12 d'une remontée mécanique, il doit être compris que les moyens de fixation 1 du dispositif de transport selon l'invention peuvent être aisément modifiés par l'homme du métier en vue d'adapter le dispositif sur n'importe quel autre moyen de transport.

On pourra par exemple envisager de fixer le dispositif de transport selon l'invention sur une cabine d'une remontée mécanique, ou sur un véhicule automobile.

Dans le cas d'une cabine de remontée mécanique, le dispositif peut être fixé sur la face avant ou sur la face arrière de la cabine, le côté extérieur de la cabine devant être laissé libre pour le passage par les portes. Le dispositif peut alors être fixé sur la cabine avec la direction longitudinale I-I du support 2 orientée perpendiculairement à la direction d'avance de la cabine. Une telle orientation permet en outre de maintenir la bicyclette de façon sûre et fiable à l'encontre d'oscillations transversales (c'est-à-dire perpendiculaires à la direction d'avance) de la cabine, oscillations transversales qui peuvent notamment se produire lors de l'entrée en gare de la cabine. Pour faciliter les opérations de chargement et de déchargement avec une telle orientation du dispositif, on peut prévoir de fixer le dispositif selon l'invention avec le premier tronçon 2a du support 2 orienté du côté extérieur de la cabine.

Le dispositif selon l'invention peut avantageusement être fabriqué en métal capable de supporter les intempéries extérieures, par exemple en acier galvanisé.

On peut également le fabriquer en un alliage d'aluminium qui permet en outre de réduire son poids pour limiter le déséquilibre du siège ou de la cabine induit par la présence du dispositif selon l'invention.

La présente invention ,n'est pas limitée aux modes de réalisation qui ont été explicitement décrits, mais elle en inclut les diverses variantes et généralisations contenues dans le domaine des revendications ci-après.

## Revendications

1. - Dispositif pour le transport d'une bicyclette (10), comportant :
- des moyens de fixation (1) pour fixer le dispositif à un moyen de transport,
- un support (2) se développant selon une direction longitudinale (I-I), adapté pour supporter les roues (10a, 10b) de la bicyclette (10),
- des moyens de retenue latérale (3) des roues (10a, 10b) de la bicyclette (10) sur le support (2),
**caractérisé en ce que** le support (2) comprend :
- un premier tronçon longitudinal (2a) en rampe montante entre une première extrémité basse (4a) et une première extrémité haute (4b), adapté pour supporter une première roue (10b) de la bicyclette (10) lors de son transport,
- un second tronçon longitudinal (2b) à profil longitudinal en creux, se développant depuis la première extrémité haute (4b) du premier tronçon longitudinal (2a) jusqu'à une seconde extrémité haute (4c), et adapté pour supporter en son creux la seconde roue (10a) de la bicyclette (10) lors de son transport.

2. - Dispositif selon la revendication 1, **caractérisé en ce que** :
- le support (2) comprend une tige principale (5) cintrée pour réaliser les premier (2a) et second (2b) tronçons longitudinaux,
- les moyens de retenue latérale (3) comprennent deux tiges secondaires (6, 7), disposées de part et d'autre et au-dessus de la tige principale (5) et solidaires de la tige principale (5).

3. - Dispositif selon la revendication 2, **caractérisé en ce que** :
- les tiges secondaires (6, 7) ont une section transversale inférieure à celle de la tige principale (5),
- la tige principale (5) et/ou les tiges secondaires (6, 7) sont des tubes creux à section transversale circulaire.

4. - Dispositif selon l'une des revendications 2 ou 3, **caractérisé en ce que** :
- les tiges secondaires (6, 7) sont cintrées de façon similaire à la tige principale (5), avec respectivement chacune un premier tronçon longitudinal (6a, 7a) en rampe montante entre une première extrémité basse (6c, 7c) et une première extrémité haute (6d, 7d), et avec respectivement chacune un second tronçon longitudinal (6b, 7b) à profil longitudinal en creux se développant depuis la première extrémité haute (6d, 7d) du premier tronçon longitudinal (6a, 7a) jusqu'à une seconde extrémité haute (6e, 7e),
- les moyens de retenue latérale (3) des roues (10a, 10b) de la bicyclette (10) sur le support (2) comprennent deux longerons (8a, 8b) supplémentaires qui relient les deux extrémités (6d, 6e, 7d, 7e) du second tronçon (6b, 7b) à profil longitudinal en creux de chacune des tiges secondaires (6, 7), les longerons (8a, 8b) supplémentaires étant disposés au-dessus et de part et d'autre de la tige principale (5) en étant écartés l'un de l'autre d'une distance (d) un peu supérieure à l'épaisseur d'une roue (10a, 10b) de la bicyclette (10).

5. - Dispositif selon l'une des revendications 2 ou 3, **caractérisé en ce que** :
- les tiges secondaires (6, 7) sont cintrées, avec respectivement chacune un premier tronçon longitudinal (6a, 7a) en rampe montante entre une première extrémité basse (6c, 7c) et une première extrémité haute (6d, 7d), et avec respectivement chacune un second tronçon longitudinal (6b', 7b') se développant depuis la première extrémité haute (6d, 7d) du premier tronçon longitudinal (6a, 7a) jusqu'à la seconde extrémité haute (4c) du support (2), les tronçons longitudinaux (6b', 7b') étant écartés l'un de l'autre d'une distance (d) un peu supérieure à l'épaisseur d'une roue (10a, 10b) de la bicyclette (10),
- les moyens de retenue latérale (3) des roues (10a, 10b) de la bicyclette (10) sur le support (2) comprennent deux tiges auxiliaires (60, 70), disposées de part et d'autre et au-dessus de la tige principale (5), solidaires de la tige principale (5) et cintrées de façon similaire au second tronçon longitudinal (2b) du support (2), avec un profil longitudinal en creux pour relier les premières extrémités hautes (6d, 7d) des tiges secondaires (6, 7) à la seconde extrémité haute (4c) du support (2).

6. - Dispositif selon l'une quelconque des revendications 2 à 5, **caractérisé en ce que** les moyens de retenue latérale (3) des roues (10a,10b) de la bicyclette (10) sur le support (2) comprennent deux arceaux (9a, 9b) dressés de part et d'autre d'une partie au moins du premier tronçon longitudinal (2a) de la tige principale (5), les arceaux (9a, 9b) étant chacun solidaires de l'une des tiges secondaires (6, 7) et se développant sensiblement au-dessus de la tige secondaire (6, 7) correspondante.

7. - Dispositif selon l'une quelconque des revendications 1 à 6, **caractérisé en ce que** le support (2) comporte un troisième tronçon longitudinal (2a') configuré en rampe montante et se développant à l'opposé du premier tronçon longitudinal (2a), entre une troisième extrémité basse (4a') et la seconde extrémité haute (4c), la troisième extrémité basse (4a') étant de préférence située au même niveau que la première extrémité basse (4a) du premier tronçon longitudinal (2a).

8. - Dispositif selon l'une quelconque des revendications 1 à 7, **caractérisé en ce que** les moyens de fixation (1) comprennent une fixation (1 b) du premier tronçon longitudinal (2a) au moyen de transport et une fixation (1a) du second tronçon longitudinal (2b) au moyen de transport.

9. - Remontée mécanique à sièges ou à cabines pour le transport de personnes, **caractérisée en ce qu'**elle comprend un dispositif selon l'une quelconque des revendications 1 à 8, fixé à au moins un siège (12) ou une cabine, avec la direction longitudinale (1-1) du support (2) orientée parallèlement à la direction d'avance du siège (12) ou de la cabine, avec de préférence le premier tronçon longitudinal (2a) du support (2) orienté vers l'arrière du siège (12) ou de la cabine, et avec le second tronçon longitudinal (2b) du support (2) orienté vers l'avant du siège (12) ou de la cabine.

10. - Remontée mécanique selon la revendication 9, **caractérisée en ce que** le dispositif est monté sur le côté du siège (12) ou de la cabine, de préférence sur le côté extérieur du siège (12) ou de la cabine.

11. - Remontée mécanique à sièges ou à cabines pour le transport de personnes, **caractérisée en qu'**elle comprend un dispositif selon l'une quelconque des revendications 1 à 8, fixé à au moins un siège (12) ou une cabine, avec la direction longitudinale (I-I) du support (2) orientée perpendiculairement à la direction d'avance du siège (12) ou de la cabine, avec de préférence le premier tronçon longitudinal (2a) du support (2) orienté du côté extérieur du siège (12) ou de la cabine.
